# EUROPÄISCHE PATENTSCHRIFT

(11) **EP 0 926 379 B1**
(45) Veröffentlichungstag und Bekanntmachung des Hinweises auf die Patenterteilung: **02.07.2003**
(21) Anmeldenummer: 98123085.7
(22) Anmeldetag: 10.12.1998
(51) Int. Cl.: F16D 65/097

(54) **Dämpfungsblech**
Damping sheet
Plaque amortissante

(30) Priorität: 18.12.1997 DE 19756553
(43) Veröffentlichungstag der Anmeldung: 30.06.1999
(73) Patentinhaber: Eagle-Picher Wolverine GmbH, 74613 Öhringen (DE)
(72) Erfinder: Heppes, Peter, Dr., 74626 Bretzfeld (DE); Noack, Hans-Hebert, 74639 Zweiflingen (DE); Weichsel, Karsten, 74629 Pfedelbach (DE)
(74) Vertreter: Lieck, Hans-Peter, Dipl.-Ing.

(56) Entgegenhaltungen:
- DE-A- 1 804 115
- DE-A- 3 104 515
- DE-A- 19 601 796
- DE-U- 1 936 361
- GB-A- 2 143 916
- US-A- 4 093 045
- US-A- 5 433 301

## Beschreibung

Die Erfindung bezieht sich auf ein Dämpfungsblech, insbesondere für Kraftfahrzeugbremsen, das aus wenigstens einem Metallblech gebildet ist und eine Druckeinleitungsfläche aufweist, die eine versetzte Weiterleitung einer auf das Dämpfungsblech aufgebrachten Druckkraft bewirkt.

Dämpfungsbleche werden in Bremsen, insbesondere in Kraftfahrzeugbremsen, angeordnet, um eine Übertragung von Schwingungen zwischen Bauteilen zu vermeiden und um Geräusche zu dämpfen. Das Dämpfungsblech ist an der Trägerplatte des Bremsbelages auf der dem Bremsbelag gegenüberliegenden Seite befestigt und leitet den vom Bremskolben bzw. bei Schwimmsattelbremsen auch von der Zange aufgebrachten Bremsdruck durch die Trägerplatte zum Bremsbelag. Seine Funktionen erfüllt das Dämpfungsblech in optimaler Weise, wenn der durch den Bremskolben bzw. die Zange aufgebrachte Druck zu einer gleichmäßigen Druckverteilung im Bremsbelag, d.h. zwischen Bremsbelag und Dämpfungsblech führt. Häufig erfordern konstruktive Zwänge jedoch, daß der Kolben/die Zange die Druckkraft nicht im Schwerpunkt des Bremsbelages aufbringt, was eine ungleichmäßige Druckbeanspruchung des Bremsbelages zur Folge hätte. Um dem entgegenzuwirken, ist es bekannt, beispielsweise aus DE 196 01 796 A1, ein Dämpfungsblech der eingangs genannten Art im Bereich der Druckkrafteinleitung mit einer sichelförmigen bzw. kreissegmentartigen Aussparung zu versehen, so daß der Kolben/die Zange mit seiner/ihrer Druckfläche nur teilweise auf dem Dämpfungsblech aufliegt. Diese Aussparung unterbricht die Druckeinleitungsfläche in Umfangsrichtung vollständig und bewirkt so eine geometrische Verlagerung des effektiven Druckpunktes. Durch geeignete Anordnung und Größe der Aussparung kann die Größe und Richtung der Druckpunktverlagerung entsprechend den Anforderungen eingestellt werden. Weiterhin ist es bekannt, in der dem Dämpfungsblech zugewandten Seite des Kolbens einen Absatz auszubilden, wodurch wiederum der Kolben nicht über seinen gesamten Umfang aufliegt und so der Druckpunkt verlagert wird.

Bei diesen vorbekannten Lösungen treten an den Enden der sichelförmigen Aussparungen oder des Absatzes im Kolben (in der Zange) lokal stark überhöhte Druckbeanspruchungen auf, wodurch beispielsweise eine Gummibeschichtung des Dämpfungsbleches sehr schnell abgerieben und das Dämpfungsblech damit zerstört wird. Darüberhinaus ist bei Schwimmsattelbremsen festgestellt worden, daß sich der Kolben und die Zange relativ stark schräg stellen und sich teilweise vom Dämpfungsblech abheben können, was wiederum zu einer erhöhten Beanspruchung des Dämpfungsbleches und auch des Bremsbelags führt und einen erhöhten Verschleiß verursacht. Aus diesem Grunde läßt auch die mit den vorbekannten Lösungen erzielte Genauigkeit bei der Druckpunktverlagerung zu wünschen übrig. Der Verschleiß wird besonders erhöht, wenn der Kolben/die Zange durch die Aussparung hindurch direkt zur Anlage an der Trägerplatte kommt. In diesem Fall wird zudem die eigentliche Funktion des Dämpfungsbleches außer Kraft gesetzt.

Demgegenüber liegt der vorliegenden Erfindung die Aufgabe zugrunde, ein gattungsgemäßes Dämpfungsblech so zu verbessern, daß der Verschleiß verringert und die Genauigkeit der Druckpunktverlagerung erhöht wird. Außerdem soll seine Funktion ständig gewährleistet sein.

Erfindungsgemäß wird diese Aufgabe bei einem Dämpfungsblech der eingangs genannten Art dadurch gelöst, daß die Druckeinleitungsfläche wenigstens zwei Bereiche mit zueinander unterschiedlichen, von Null verschiedenen Drucksteifigkeiten aufweist und daß zumindest ab einem vorgegebenen Druck in jedem der Bereiche ein Teil der Druckkraft in die Druckeinleitungsfläche einleitbar ist, wobei ein die Druckkraft aufbringendes Druckbauteil zumindest ab einem vorgegebenen Druck über den gesamten Umfang seiner Druckfläche auf einer im wesentlichen geschlossenen Kreisringlinie an der Druckeinleitungsfläche anlegbar ist.

Mit den erfindungsgemäßen Maßnahmen wird die Lebensdauer von Dämpfungsblechen wesentlich erhöht und dabei die Übertragung von Schwingungen weiter reduziert und Geräusche stärker gedämpft. Dadurch, daß die Druckpunktverlagerung nicht mehr geometrisch, sondern durch unterschiedliche Drucksteifigkeiten, d.h. Einfederungen, in der Druckeinleitungsfläche erzielt wird, wobei das die Druckkraft aufbringende Druckbauteil über den gesamten Umfang seiner Druckfläche auf einer im wesentlichen geschlossenen Kreisringlinie an der Druckeinleitungsfläche anliegt, wird in der Druckeinleitungsfläche ein kontinuierlicherer Übergang zwischen den Bereichen niedrigerer und höherer Drucksteifigkeit erreicht. Hierdurch werden örtliche Spannungsspitzen verringert und so die Dämpfungsbleche lokal weniger beansprucht, was zu einem reduzierten Verschleiß führt. Außerdem wird die Schrägstellung vermindert und kann so ein Abheben des Kolbens bzw. der Zange vom Dämpfungsblech weitestgehend vermieden werden, so daß die Druckpunktverlagerung feiner eingestellt werden kann. In jedem Fall ist ein direkter Kontakt des Kolbens/der Zange mit der Trägerplatte des Bremsbelags nicht mehr möglich.

Bevorzugte Ausführungsformen sind in den Unteransprüchen angegeben.

So kann durch die Anordnung von Sicken nicht nur die Drucksteifigkeit in einem Bereich der Druckeinleitungsfläche, sondern auch noch die Biegesteifigkeit des Dämpfungsbleches erhöht werden. Außerdem erhält das Dämpfungsblech durch die Anordnung von Sicken eine weitere Verliersicherung, da sich, wenn das Druckbauteil die Sicke durch Druckbeaufschlagung verformt, an den Rändern der Aufstandsfläche Wülste ausbilden, die dazu beitragen, das Druckbauteil in seiner Lage zu halten.

Es ist aber auch möglich, die unterschiedlichen Drucksteifigkeiten dadurch auszubilden, daß der Bereich, der eine niedrigere Drucksteifigkeit aufweisen soll, teilweise ausgespart wird. Bei dieser Ausführungsform liegt der Kolben von Anfang an über den gesamten Umfang seiner Druckfläche zumindest abschnittsweise an. Für die Ausbildung und Anordnung der Aussparungen ist eine Vielzahl von Variationen denkbar.

Eine mit Beginn der Druckbeaufschlagung des Dämpfungsbleches vollflächige Auflage des Druckbauteils auf der Druckeinleitungsfläche wird erzielt, wenn die unterschiedlichen.Drucksteifigkeiten nur durch unterschiedliche Druck-Elastizitätsmodule verwendeter Materialien ausgebildet sind.

Denkbar ist auch ein sandwichartiges Dämpfungsblech, das aus zwei einzelnen Dämpfungsblechen zusammengesetzt ist, wobei das dem Druckbauteil zugewandte, oberste Dämpfungsblech ausgespart ist.

In vorteilhafter Ausgestaltung der Erfindung sind nur in ausgewählten Bereichen der Druckeinleitungsfläche Elemente angeordnet, die die mittlere Drucksteifigkeit dieser Bereiche erhöhen oder verringern, d.h. es kann mindestens ein Bereich frei von solchen Elementen bleiben.

Dabei gehören besonders bevorzugt gleiche Elemente zum selben Bereich und sind die Bereiche in monoton steigender Reihenfolge ihrer mittleren Drucksteifigkeit angeordnet. Die Drucksteifigkeit steigt somit stetig vom Bereich kleinster Drucksteifigkeit zum Bereich größster Drucksteifigkeit an. Durch Vermeidung eines wellenförmigen Drucksteifigkeitsverlaufs wird eine äußerst effektive Druckpunktverlagerung erzielt.

Die Erfindung wird nachfolgend an Hand der Zeichnung beispielshalber noch näher erläutert. Es zeigen:
- Fig. 1: eine Draufsicht auf ein erfindungsgemäßes Dämpfungsblech mit einer ersten Ausführungsform einer in der Druckeinleitungsfläche angeordneten Sicke;
- die Fig. 2a, 2b und 2c: eine Querschnittsansicht längs der Linie 2-2 in Fig. 1, wobei das Aufsetzen und Abheben eines Bremskolbens auf dem Dämpfungsblech dargestellt ist;
- die Fig. 3a und 3b: eine Querschnittsansicht längs Linie 3-3 in Fig. 1, wobei zwei Ausbildungsvarianten für Sickenverläufe dargestellt sind;
- Fig. 4: eine der Fig. 1 ähnliche Draufsicht mit einer zweiten und dritten Ausführungsform für Sicken;
- die Fig. 5a und 5b: jeweils eine Querschnittsansicht längs der Linie 5-5 in Fig. 4, wobei zwei mögliche Sickenverläufe dargestellt sind;
- Fig. 6: eine der Fig. 1 ähnliche Draufsicht, wobei unterhalb der Sicke ein elastisches Material angeordnet ist;
- Fig. 7: eine Querschnittsansicht längs Linie 7-7 in Fig. 6;
- Fig. 8: eine der Fig. 1 ähnliche Draufsicht, wobei eine erste Ausführungsform für eine teilweise Aussparung in dem Bereich mit niedriger Drucksteifigkeit dargestellt ist;
- Fig. 9: eine Querschnittsansicht längs Linie 9-9 in Fig. 8;
- Fig. 10: eine der Fig. 8 ähnliche Draufsicht, wobei eine zweite Ausführungsform einer teilweisen Aussparung dargestellt ist;
- Fig. 11: eine Querschnittsansicht längs Linie 11-11 in Fig. 10;
- Fig. 12: eine der Fig. 8 ähnliche Draufsicht, mit einer unsymmetrischen Anordnung einer teilweisen Aussparung; .
- Fig. 13: eine Querschnittsansicht längs Linie 13-13 in Fig. 12;
- Fig. 14: eine der Fig. 8 ähnliche Draufsicht, mit einer dritten Ausführungsform für eine teilweise Aussparung;
- die Fig. 15a und 15b: eine Querschnittsansicht längs Linie 15-15 in Fig. 14, mit zwei Querschnittsvarianten;
- Fig. 16: eine der Fig. 8 ähnliche Draufsicht, mit einer vierten Ausführungsform für eine teilweise Aussparung;
- Fig. 17: eine Querschnittsansicht eines erfindungsgemäßen Dämpfungsbleches, das aus zwei Metallblechen gebildet ist.

Die in den Figuren dargestellten Ausführungsbeispiele zeigen einige der Möglichkeiten zur Ausbildung von Bereichen mit zueinander unterschiedlichen Drucksteifigkeiten in der Druckeinleitungsfläche eines erfindungsgemäßen Dämpfungsbleches 1. Die Druckeinleitungsfläche 2 ist in allen Beispielen kreisringförmig ausgebildet, jedoch ist es auch durchaus möglich, daß die Druckeinleitungsfläche 2 vollflächig ausgebildet ist und dementsprechend der Bremskolben/die Zange 3 auch vollflächig anliegen. Ferner ist die Form der Druckeinleitungsfläche 2 nicht auf einen Kreis beschränkt, sondern kann vielmehr jede geeignete Form annehmen, wie z. B. ein Rechteck. Wichtig ist, daß die Druckfläche der Bremskolben/der Zange 3 nicht über den Außenrand des Dämpfungsbleches 1 übersteht, um eine auch hierdurch mögliche geometrische Druckpunktverlagerung zu vermeiden.

Die Dämpfungsbleche 1 sind aus wenigstens einem Metallblech hergestellt und vorzugsweise auf mindestens einer Seite mit Gummi beschichtet. Die Druckeinleitungsfläche 2 kann auf der gummibeschichteten Seite vorgesehen sein oder aber auch auf der anderen Seite.

Wie in den Figuren dargestellt ist, ist das Dämpfungsblech 1 auf einer Trägerplatte 4 angeordnet, auf deren anderen Seite der Bremsbelag 5 angebracht ist, der seinerseits an einer (nicht dargestellten) Bremsscheibe anliegt.

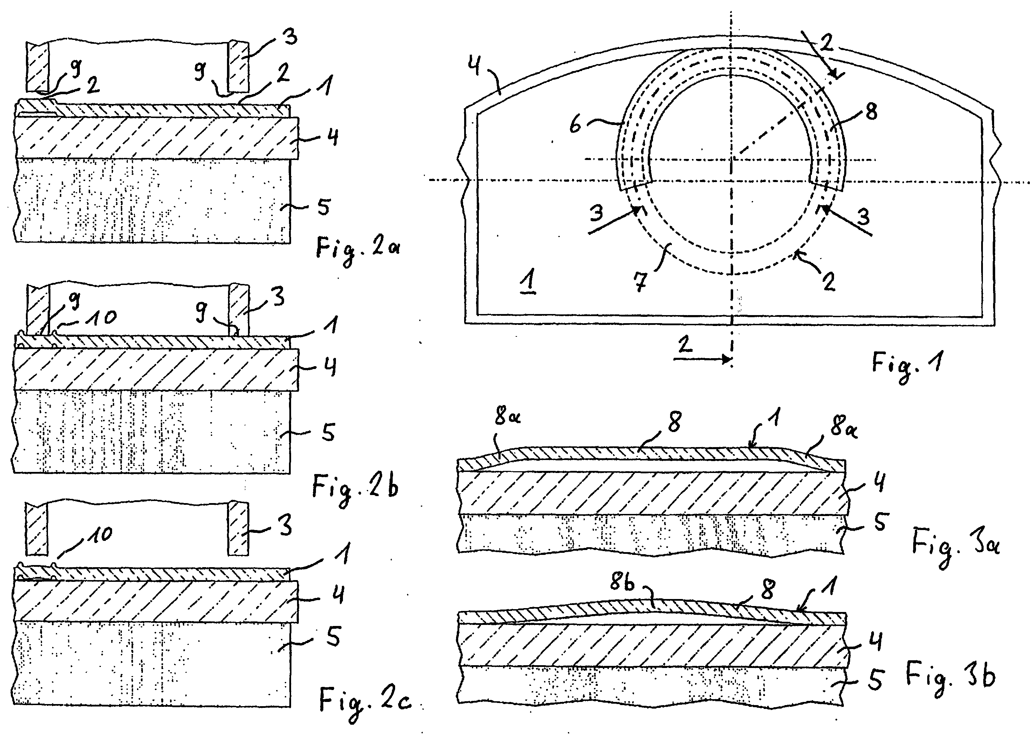

Gemäß der in den Fig. 1 bis 7 dargestellten Ausführungsformen, werden die Bereiche mit zueinander unterschiedlichen Drucksteifigkeiten 6, 7 in der Druckeinleitungsfläche dadurch ausgebildet, daß in einem Bereich die Drucksteifigkeit durch Anordnung geprägter Sicken erhöht wird.

Die in Fig. 1 dargestellte Sicke 8 verläuft in Umfangsrichtung des Kreisringes über einen Kreisringabschnitt, wobei, wie aus den Fig. 3a und 3b ersichtlich ist, auch der Verlauf der Sicke 8 in Umfangsrichtung variiert werden kann. Gemäß Fig. 3a verläuft die Sicke 8 bis auf die Endbereiche 8a mit einer konstanten Sickenhöhe, während gemäß Fig. 3b die Sikkenhöhe von einem Endbereich 8a der Sicke 8 in Umfangsrichtung des Kreisringes bis zur Sickenmitte 8b hin zunimmt und von dort bis zu dem anderen Endbereich 8a hin wieder abnimmt.

In den Fig. 2a, 2b und 2c ist die Verformung der Sicke 8 unter Druckbeaufschlagung eines Druckbauteils 3, beispielsweise eines Bremskolbens, dargestellt. Fig. 2a zeigt den Ausgangszustand vor einer erstmaligen Druckbeaufschlagung, bei dem ein Bremskolben 3 in einem Abstand über der Druckeinleitungsfläche 2 angeordnet und die Sicke 8 noch vollständig unverformt ist. Wenn der Kolben 3 mit Druck beaufschlagt wird, legt er sich zuerst mit einem Abschnitt seiner Aufstandsfläche an der Oberseite der Sicke 8 an und drückt diese unter teils plastischer, teils elastischer Verformung nach unten, bis diese bei einem vorgegebenen Druck mit ihrer Unterseite an der Trägerplatte 4 anliegt. In diesem Zustand liegt der Kolben 3 mit seiner gesamten Aufstandsfläche 9 vollumfänglich auf der Druckeinleitungsfläche 2 des Dämpfungsbleches auf (Fig. 2b). Hierbei übt der Kolben 3 durch die teilelastische Verformung der Sicke 8 im Sickenbereich 6 eine größere Pressung aus als in dem Bereich 7 der Druckeinleitungsfläche 2, der nicht mit einer Sicke 8 versehen ist. Die Sicke 8 bildet bei ihrer Verformung an ihrem in Radialrichtung innenliegenden und außenliegenden Rand jeweils eine Wulst 10 aus, die radial innen und außen an die kreisringförmige Aufstandsfläche 9 des Bremskolbens 3 angrenzt und so für dessen Lagesicherung sorgt. Wenn der Bremskolben 3 wieder entlastet wird, hebt er sich von dem Dämpfungsblech 1 ab, wobei sich die Sicke 8 um den Teil ihrer elastischen Verformung wieder zurückverformt (Fig. 2c).

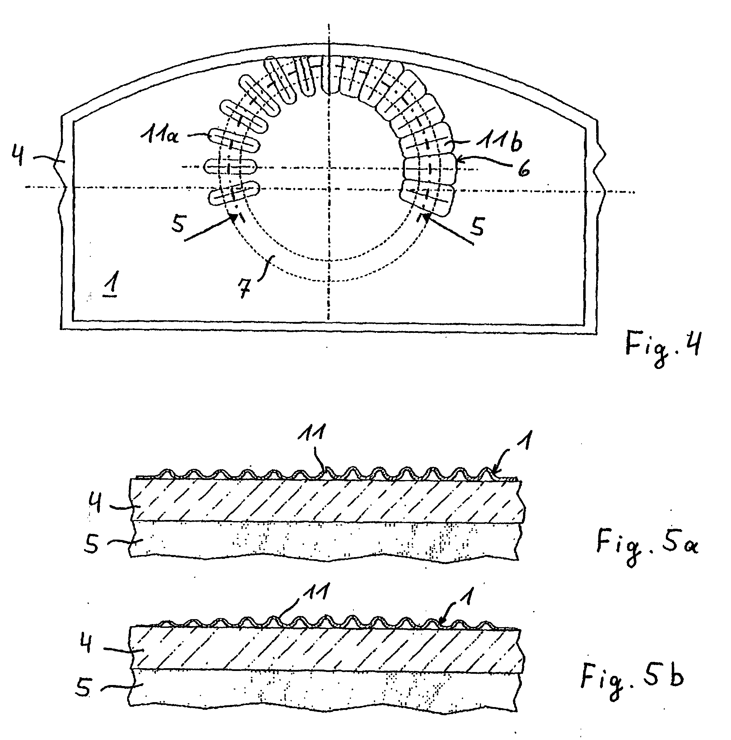

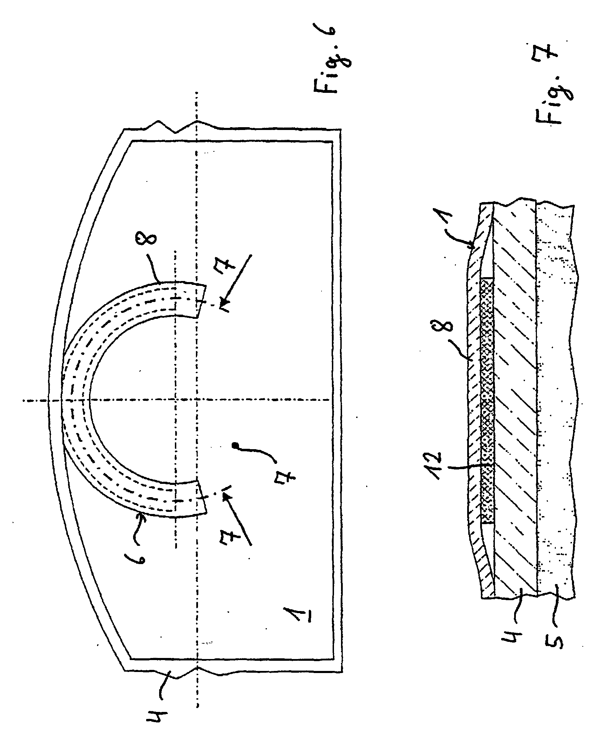

In den Fig. 4, 5a und 5b sind eine Reihe von in Umfangsrichtung des Kreisringabschnittes nebeneinander liegenden, radial verlaufenden Sicken 11 angeordnet. Dabei können zwischen den Sicken 11a deutliche Abstände vorgesehen sein, wie es in der linken Hälfte der Fig. 4 dargestellt ist. Die Sicken 11b können jedoch auch direkt aneinander anschließen, wie es in Fig. 4 in der rechten Hälfte dargestellt ist. In Umfangsrichtung kann die Sickenhöhe konstant oder veränderlich sein. Beispielsweise kann die Höhe der Sicken von der ersten bis zur letzten Sicke gleich sein (Fig. 5a) oder von den Endsicken der Reihe zur Mitte der Reihe hin zunehmen (Fig. 5b).

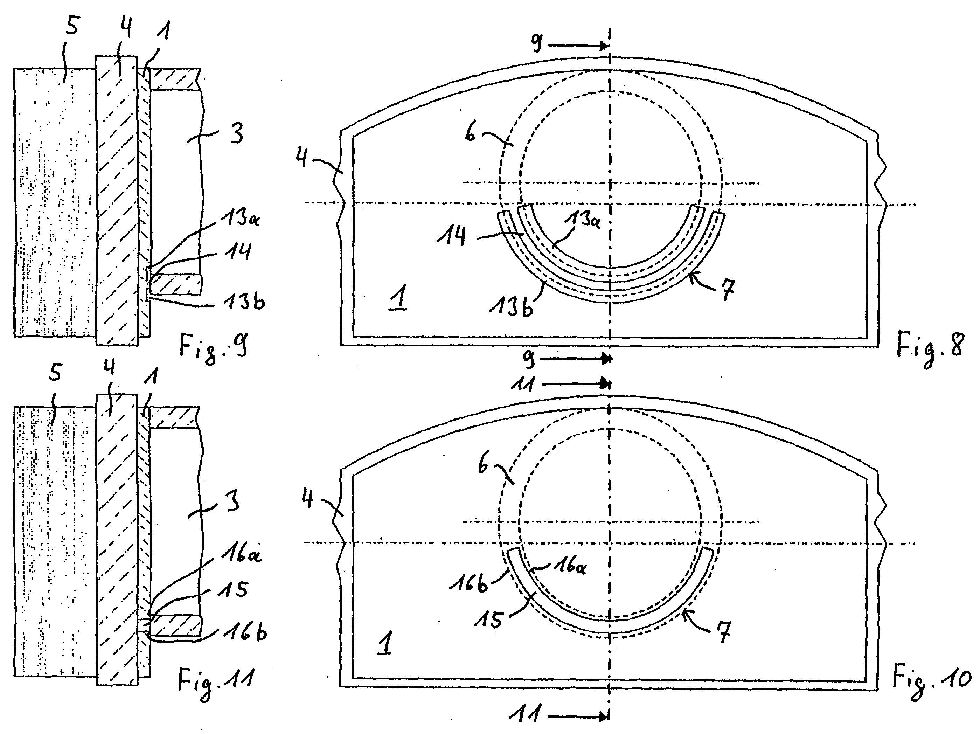

Zur Erhöhung der Drucksteifigkeit bzw. der Elastizität kann unter den Sicken ein elastisches Material 12 angeordnet werden, wie dies für den Fall der in Fig. 1 dargestellten Sikkenform in den Fig. 6 und 7 gezeigt ist.

Die Sickenkontur, z. B. Höhe, Breite, Radien, und der Sickenverlauf bzw. -bogen kann an jede Anforderung angepaßt werden. Die Form der Sicken 8, 11 ist in keiner Hinsicht begrenzt.

In den Fig. 8 bis 16 sind Ausführungsbeispiele dargestellt, bei denen die Bereiche 6, 7 unterschiedlicher Drucksteifigkeiten in der Druckeinleitungsfläche 2 dadurch ausgebildet sind, daß in einem Bereich die Drucksteifigkeiten durch teilweises Aussparen von Material verringert sind. Bei diesen Ausführungsformen ist das Metallblech vorzugsweise zumindest einseitig mit Gummi beschichtet, um eine Kraftumlagerung zu fördern. Bei einseitiger Gummibeschichtung kann dabei die Gummibeschichtung wahlweise auf der Druckeinleitungsseite oder der gegenüberliegenden Seite vorgesehen sein.

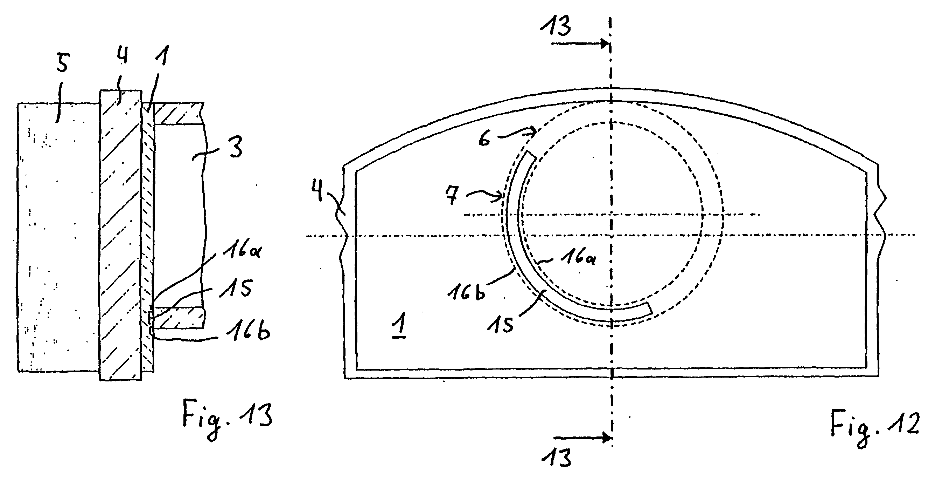

Bei dem in den Fig. 8 und 9 dargestellten Ausführungsbeispiel ist eine radial innenliegende, in Umfangsrichtung verlaufende Aussparung 13a und eine radial außenliegende, in Umfangsrichtung verlaufende zweite Aussparung 13b vorgesehen, zwischen denen ein Materialsteg 14 vorhanden ist, auf dem das Druckbauteil 3 aufsteht (Fig. 9). Die Oberseite des Materialsteges 14 liegt bündig mit der Oberseite des vollflächigen Bereiches der Druckeinleitungsfläche 2, so daß der Kolben 3 auf einer geschlossenen Kreisringlinie an der Druckeinleitungsfläche 2 anliegt. Die Aussparungen 13 erstrecken sich nicht über die gesamte Dicke des Dämpfungsbleches 1.

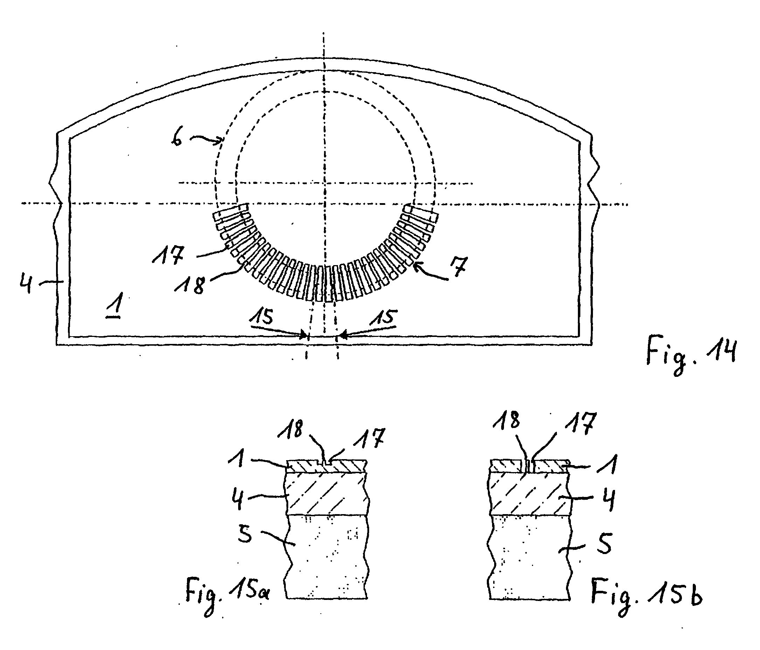

In den Fig. 10 und 11 ist ein Ausführungsbeispiel gezeigt, bei dem eine sich in Umfangsrichtung der kreisringförmigen Druckeinleitungsfläche erstreckende Aussparung 15 ausgebildet ist, die in Radialrichtung in der Mitte des Kreisringes angeordnet ist. Hier sind ein radial innenliegender und ein radial außenliegender Materialsteg 16a, 16b vorhanden, auf denen der Kolben 3 aufliegt. Auch hier steht somit der Kolben 3 auf einer geschlossenen Kreisringlinie auf der Druckeinleitungsfläche 2 des Dämpfungsbleches 1 auf. In diesem Beispiel verläuft die Aussparung 15 durch das Dämpfungsblech 1 hindurch und bildet eine Durchbrechung.

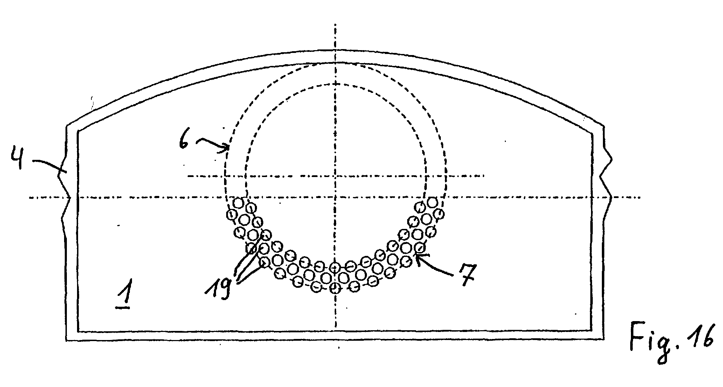

Die Fig. 12 und 13 zeigen an Hand der in Fig. 10 dargestellten Teilaussparung 15, daß die Bereiche 6, 7 mit den zueinander unterschiedlichen Drucksteifigkeiten zu einer Symmetrielinie des Dämpfungsbleches nicht notwendigerweise symmetrisch liegen müssen. Vielmehr können die Aussparungen (oder die Sicken) in jeder geeigneten Weise auf der Druckeinleitungsfläche 2 verteilt sein, um die Größe und Richtung der gewünschten Druckpunktverlagerung möglichst genau einzustellen.

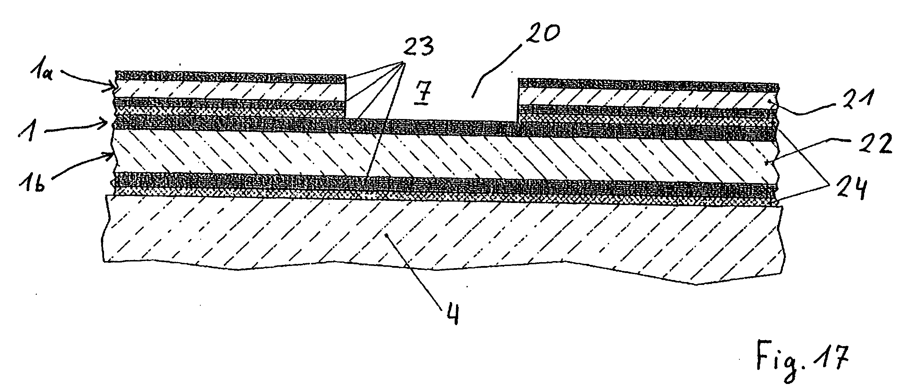

Die Aussparungen können, wie aus den Fig. 14, 15a und 15b ersichtlich ist, auch in Radialrichtung verlaufen. Dabei sind die Aussparungen 17 in einer in Umfangsrichtung des Kreisringabschnittes verlaufenden Reihe nebeneinander angeordnet, so daß zwischen zwei benachbarten Aussparungen ein in Radialrichtung verlaufender Materialsteg 18 belassen ist. Auch bei diesem Ausführungsbeispiel liegt die Oberseite der Stege 18 bündig mit der Oberseite des nicht ausgesparten Bereiches der Druckeinleitungsfläche 2, so daß ein Druckbauteil 3 bereits bei Beginn der Druckbeaufschlagung über den gesamten Umfang seiner Druckfläche verteilt zumindest abschnittsweise aufliegt. Wie den Fig. 15a und 15b - und auch den Fig. 9, 11 und 13 - zu entnehmen ist, können sich die Aussparungen sowohl nur über einen Teil der Dicke des Dämpfungsbleches erstrecken als auch vollständig durch dieses hindurchlaufen, so daß im Dämpfungsblech 1 kleine Durchgangsöffnungen ausgebildet sind. Wenn die Aussparungen sich nur über einen Teil der Dicke des Dämpfungsbleches erstrecken, können sie auch auf der dem Druckbauteil abgewandten Seite angeordnet werden.

Als weiteres Ausführungsbeispiel ist in Fig. 16 eine Teilaussparung dargestellt, die aus mehreren, im dargestellten Beispiel aus drei, in Radialrichtung nebeneinander liegenden, in Umfangsrichtung verlaufenden Reihen von kreisförmigen Aussparungen 19 gebildet ist.

Es ist ersichtlich, daß die mögliche Ausbildung und Anordnung der Sicken und Teilaussparungen vielfältig sind und den jeweiligen Erfordernissen beliebig angepaßt werden können. Beispielsweise können anstatt linienförmiger Teilaussparungen oder Sicken bei einer vollflächigen Anlage des Druckbauteils auch sektorförmige Teilaussparungen oder Sicken vorgesehen sein. Wichtig ist dabei, daß das Druckbauteil mit über den gesamten Umfang seiner Druckfläche verteilten Abschnitten an der Druckeinleitungsfläche des Dämpfungsbleches zumindest ab einem vorgegebenen Druck anliegen kann und die Druckpunktverlagerung durch die geeignete Wahl von Drucksteifigkeiten gesteuert wird.

Bei der in Fig. 17 dargestellten Ausführungsform ist das Dämpfungsblech 1 sandwichartig aus zwei beidseitig mit Gummi beschichteten Metallblechen, d.h. aus zwei einzelnen Dämpfungsblechen 1a, 1b, gebildet, die untereinander und mit der Trägerplatte 4 durch Klebstoff verbunden sind. Als Aussparung sind hier nicht Teilaussparungen vorgesehen, sondern ist eine vollflächige Aussparung 20 in dem dem Druckbauteil zugewandten, oberen Dämpfungsblech 1a angeordnet, um den Bereich 7 mit der niedrigeren Drucksteifigkeit auszubilden. Dabei ist die Dicke des oberen Metallbleches 21 wesentlich dünner als die des unteren Metallbleches 22 gewählt und auch die Verformungsfähigkeit der Gummischichten 23 als auch der Klebstoffschicht 24 zwischen den beiden Dämpfungsblechen so ausgelegt, daß das Druckbauteil durch eine leichte Schrägstellung in der Aussparung 20 auf der Gummibeschichtung des unteren Dämpfungsbleches 1b zur Anlage kommt und dabei nicht von dem oberen Dämpfungsblech 1a abhebt. Aufgrund seiner hochelastischen Eigenschaften kann der Klebstoff 24 nennenswert zur Ausbildung unterschiedlicher Drucksteifigkeiten beitragen. Auch hierdurch wird erreicht, daß das Druckbauteil über seinen gesamten Umfang zumindest abschnittsweise auf der Druckeinleitungsfläche des Gesamt-Dämpfungsbleches 1 aufsteht. Zu Anfang der Druckbeaufschlagung liegt jedoch das Druckbauteil mit einem Abschnitt seiner Druckfläche nur auf dem obersten Dämpfungsblech 1a auf. Eine Anlage des Druckbauteils an der Trägerplatte 4 und die damit verbundenen Spannungsspitzen und Verschleißerscheinungen werden durch das untere Dämpfungsblech 1b in jedem Fall vermieden.

## Patentansprüche

1. Dämpfungsblech, insbesondere für Kraftfahrzeugbremsen, das aus wenigstens einem Metallblech gebildet ist und eine Druckeinleitungsfläche aufweist, die eine versetzte Weiterleitung einer auf das Dämpfungsblech aufgebrachten Druckkraft bewirkt,
**dadurch gekennzeichnet,**
**daß** die Druckeinleitungsfläche (2) wenigstens zwei Bereiche (6, 7) mit zueinander unterschiedlichen, von Null verschiedenen Drucksteifigkeiten aufweist und daß zumindest ab einem vorgegebenen Druck in jedem der Bereiche (6, 7) ein Teil der Druckkraft in die Druckeinleitungsfläche (2) einleitbar ist, wobei ein die Druckkraft aufbringendes Druckbauteil (3) zumindest ab einem vorgegebenen Druck über den gesamten Umfang seiner Druckfläche auf einer im wesentlichen geschlossenen Kreisringlinie an der Druckeinleitungsfläche (2) anlegbar ist.

2. Dämpfungsblech nach Anspruch 1,
**dadurch gekennzeichnet,**
**daß** das wenigstens eine Metallblech (21, 22) zumindest einseitig mit Gummi (23) beschichtet ist.

3. Dämpfungsblech nach Anspruch 2,
**dadurch gekennzeichnet,**
**daß** die Druckeinleitungsfläche (2) auf der mindestens einen mit Gummi (23) beschichteten Seite des Metallblechs (21, 22) vorgesehen ist.

4. Dämpfungsblech nach einem der Ansprüche 1 bis 3,
**dadurch gekennzeichnet,**
**daß** die Druckeinleitungsfläche (2) kreisringförmig ausgebildet ist.

5. Dämpfungsblech nach Anspruch 4,
**dadurch gekennzeichnet,**
**daß** der den Bereich (6) mit der größeren Drucksteifigkeit bildende Kreisringabschnitt eine in Umfangsrichtung verlaufende Sicke (8) aufweist, die bei dem vorgegebenen Druck zumindest teilelastisch verformt ist.

6. Dämpfungsblech nach Anspruch 4,
**dadurch gekennzeichnet,**
**daß** der den Bereich (6) mit der größeren Drucksteifigkeit bildende Kreisringabschnitt eine Mehrzahl von radial verlaufenden, in Umfangsrichtung nebeneinander liegenden Sicken (11) aufweist.

7. Dämpfungsblech nach Anspruch 5 oder 6,
**dadurch gekennzeichnet,**
**daß** unter den Sicken (8, 11) elastisches Material (12) angeordnet ist.

8. Dämpfungsblech nach einem der Ansprüche 1 bis 4,
**dadurch gekennzeichnet,**
**daß** in dem die kleinere Drucksteifigkeit aufweisenden Bereich (7) die Druckeinleitungsfläche (2) teilweise ausgespart ist.

9. Dämpfungsblech nach Anspruch 8 in Verbindung mit Anspruch 2 und 4,
**dadurch gekennzeichnet,**
**daß** der den Bereich (7) mit der kleineren Drucksteifigkeit bildende Kreisringabschnitt eine radial innenliegende, in Umfangsrichtung verlaufende Aussparung (13a) und eine radial außenliegende, in Umfangsrichtung verlaufende Aussparung (13b) aufweist, zwischen denen ein Materialsteg (14) belassen ist.

10. Dämpfungsblech nach Anspruch 8 in Verbindung mit Anspruch 2 und 4,
**dadurch gekennzeichnet,**
**daß** der den Bereich (7) mit der kleineren Drucksteifigkeit bildende Kreisringabschnitt eine radial mittig angeordnete, in Umfangsrichtung verlaufende Aussparung (15) aufweist, wobei ein radial innenliegender sowie ein radial außenliegender Materialsteg (16a, 16b) belassen ist.

11. Dämpfungsblech nach Anspruch 8 in Verbindung mit Anspruch 2 und 4,
**dadurch gekennzeichnet,**
**daß** der den Bereich (7) mit der kleineren Drucksteifigkeit bildende Kreisringabschnitt in Radialrichtung verlaufende Aussparungen (17) und Materialstege (18) aufweist, die in Umfangsrichtung einander abwechselnd angeordnet sind.

12. Dämpfungsblech nach Anspruch 8 in Verbindung mit Anspruch 2 und 4,
**dadurch gekennzeichnet,**
**daß** der den Bereich (7) mit der kleineren Drucksteifigkeit bildenden Kreisringabschnitt eine Vielzahl von kleinen Aussparungen (19) aufweist, die in einer radial innenliegenden, einer radial mittig angeordneten und einer radial außenliegenden jeweils in Umfangsrichtung verlaufenden Reihe angeordnet sind.

13. Dämpfungsblech nach einem der Ansprüche 1 bis 4,
**dadurch gekennzeichnet,**
**daß** die Druckeinleitungsfläche (2) vollflächig ausgebildet ist und die Bereiche mit zueinander unterschiedlichen Drucksteifigkeiten unterschiedliche Druck-Elastizitätsmodule aufweisen.

14. Dämpfungsblech nach Anspruch 2 oder 4 in Verbindung mit Anspruch 2,
**dadurch gekennzeichnet,**
**daß** es aus mindestens zwei übereinanderliegenden, miteinander verbundenen Dämpfungsblechen (1a, 1b) gebildet ist und der Bereich (7) mit der kleineren Drucksteifigkeit durch eine vollflächige Aussparung (20) in dem obersten, der Druckkraft zugewandten Dämpfungsblech (1a) ausgebildet ist, wobei die elastische Verformbarkeit dieses Dämpfungsblechs (1a) so ausgelegt ist, daß das die Druckkraft aufbringende, anfangs nur am obersten Dämpfungsblech (1a) anliegende Druckbauteil durch Schrägstellung bei dem vorgegebenen Druck am darunterliegenden Dämpfungsblech (1b) anlegbar ist.

15. Dämpfungsblech nach einem der Ansprüche 1 bis 14,
**dadurch gekennzeichnet,**
**daß** nur in ausgewählten Bereichen der Druckeinleitungsfläche (2) Elemente (8; 11; 13; 14; 15; 16; 17, 18; 19; 20, 23, 24), angeordnet sind, die die mittlere Drucksteifigkeit dieser Bereiche erhöhen oder verringern.

16. Dämpfungsblech nach Anspruch 15,
**dadurch gekennzeichnet,**
**daß** gleiche Elemente (8; 11; 13; 14; 15; 16; 17, 18; 19; 20, 23, 24) einen einzigen Bereich ausbilden und die Bereiche in monoton steigender Reihenfolge ihrer mittleren Drucksteifigkeit angeordnet sind.

## Claims

1. A damping plate, in particular for motor vehicle brakes, which consists of at least one metal plate and has a pressure-introducing face which results in a pressure force applied to the damping plate being transmitted further in an offset manner, **characterized in that** the pressure-introducing face (2) has at least two regions (6, 7) having mutually different compressive strengths other than zero, and **in that** part of the pressure force may be transmitted to the pressure-introducing face (2) in each of the regions (6, 7), above a predetermined pressure at least, such that a pressure component (3) applying the pressure force may act on a substantially closed ring on the pressure-introducing face (2) over the entire periphery of its pressure face, above a predetermined pressure at least.

2. A damping plate according to Claim 1, **characterized in that** at least one side of at least one metal plate (21, 22) is covered with rubber (23).

3. A damping plate according to Claim 2, **characterized in that** the pressure-introducing face (2) is provided on the at least one side of the metal plate (21, 22) covered with rubber (23).

4. A damping plate according to one of Claims 1 to 3, **characterized in that** the pressure-introducing face (2) is constructed in the shape of a ring.

5. A damping plate according to Claim 4, **characterized in that** the portion of the ring which forms the region (6) having the greater compressive strength has a bead (8) which extends in the peripheral direction and is deformed at least partly resiliently at the predetermined pressure.

6. A damping plate according to Claim 4, **characterized in that** that portion of the ring which forms the region (6) having the greater compressive strength has a plurality of radially extending beads (11) which are mutually adjacent in the peripheral direction.

7. A damping plate according to Claim 5 or 6, **characterized in that** resilient material (12) is arranged under the beads (8, 11).

8. A damping plate according to one of Claims 1 to 4, **characterized in that** the pressure-introducing face (2) is partially cut away in the region (7) having the lower compressive strength.

9. A damping plate according to Claim 8 in conjunction with Claims 2 and 4, **characterized in that** that portion of the ring which forms the region (7) having the lower compressive strength has a radially inner cutout (13a) extending in the peripheral direction and a radially outer cutout (13b) extending in the peripheral direction, a material web (14) being left between said cutouts.

10. A damping plate according to Claim 8 in conjunction with Claims 2 and 4, **characterized in that** that portion of the ring which forms the region (7) having the lower compressive strength has a cutout (15) which is arranged radially centrally and extends in the peripheral direction, and adjacent to this there is left a radially inner and a radially outer material web (16a, 16b).

11. A damping plate according to Claim 8 in conjunction with Claims 2 and 4, **characterized in that** that portion of the ring which forms the region (7) having the lower compressive strength has cutouts (17) and material webs (18) which extend in the radial direction and are arranged alternately in the peripheral direction.

12. A damping plate according to Claim 8 in conjunction with Claims 2 and 4, **characterized in that** that portion of the ring which forms the region (7) having the lower compressive strength has a plurality of small cutouts (19) which are arranged in a radially inner row, a radially central row and a radially outer row, each extending in the peripheral direction.

13. A damping plate according to one of Claims 1 to 4, **characterized in that** the pressure-introducing face (2) forms an entire surface and the regions having mutually different compressive strengths have different moduli of elasticity in compression.

14. A damping plate according to Claim 2 or 4 in conjunction with Claim 2, **characterized in that** it is formed by at least two mutually connected damping plates (1a, 1b) lying one above the other, and the region (7) having the lower compressive strength is formed by a cutout (20) over the entire surface of the upper damping plate (1a) facing the pressure force, the resilient deformability of this damping plate (1a) being such that the pressure component applying the pressure force and, at the start, acting on only the upper damping plate (1a) may act on the underlying damping plate (1b) at the predetermined pressure as a result of inclining it.

15. A damping plate according to one of Claims 1 to 14, **characterized in that** elements (8; 11; 13; 14; 15; 16; 17; 18; 19; 20; 23; 24) are arranged only in selected regions of the pressure-introducing face (2) and increase or reduce the mean compressive strength of these regions.

16. A damping plate according to Claim 15, **characterized in that** similar elements (8; 11; 13; 14; 15; 16; 17; 18; 19; 20; 23; 24) form a single region and the regions are arranged in a monotonically increasing order according to their mean compressive strength.

## Revendications

1. Tôle d'amortissement, notamment pour des freins de véhicule automobile, qui est constituée d'au moins une tôle métallique et qui présente une face d'introduction de pression qui provoque une transmission décalée d'une force de pression appliquée à la tôle d'amortissement, **caractérisée en ce que** la face d'introduction de pression (2) présente au moins deux zones (6, 7) de rigidités en pression différentes l'une de l'autre, différentes de zéro, et **en ce qu'**au moins à partir d'une pression prédéterminée dans chacune des zones (6, 7), une partie de la force de pression peut être introduite dans la face d'introduction de pression (2), où un composant de pression (3) appliquant la force de pression, au moins à partir d'une pression prédéterminée sur tout le pourtour de sa face de pression, peut être appliqué sur une ligne d'anneau de cercle sensiblement fermée à la face d'introduction de pression (2).

2. Tôle d'amortissement selon la revendication 1, **caractérisée en ce qu'**au moins une tôle métallique (21, 22) est recouverte, au moins sur un côté, de caoutchouc (23).

3. Tôle d'amortissement selon la revendication 2, **caractérisée en ce que** la face d'introduction de pression (2) est prévue sur le, au moins un côté recouvert de caoutchouc (23) de la tôle métallique (21, 22).

4. Tôle d'amortissement selon l'une des revendications 1 à 3, **caractérisée en ce que** la face d'introduction de pression (2) est réalisée en anneau de cercle.

5. Tôle d'amortissement selon la revendication 4, **caractérisée en ce que** la section de l'anneau de cercle formant la zone (6) de la plus grande rigidité en pression présente une moulure (8) s'étendant dans la direction périphérique qui, à la pression prédéterminée, est déformée au moins partiellement élastiquement.

6. Tôle d'amortissement selon la revendication 4, **caractérisée en ce que** la section de l'anneau de cercle formant la zone (6) de la plus grande rigidité en pression présente une pluralité de moulures (11) s'étendant radialement, situées les unes à côté des autres dans la direction périphérique.

7. Tôle d'amortissement selon la revendication 5 ou 6, **caractérisée en ce qu'**il est disposé sous les moulures (8, 11) un matériau élastique (12).

8. Tôle d'amortissement selon l'une des revendications 1 à 4, **caractérisée en ce que** dans la zone (7) présentant la rigidité en pression plus basse, la face d'introduction de pression (2) est partiellement évidée.

9. Tôle d'amortissement selon la revendication 8 en rapport avec les revendications 2 et 4, **caractérisée en ce que** la section de l'anneau de cercle formant la zone (7) ayant la plus petite rigidité en pression présente un évidement (13a) situé radialement à l'intérieur, s'étendant dans la direction périphérique et un évidement (13b) situé radialement à l'extérieur, s'étendant dans la direction périphérique entre lesquelles subsiste une entretoise de matériau (14).

10. Tôle d'amortissement selon la revendication 8 en rapport avec les revendications 2 et 4, **caractérisée en ce que** la section de l'anneau de cercle formant la zone (7) ayant la plus petite rigidité en pression présente un évidement (15) disposé radialement au milieu, s'étendant dans la direction périphérique, où subsistent une entretoise de matériau située radialement à l'intérieur ainsi qu'une entretoise de matériau située radialement à l'extérieur (16a, 16b).

11. Tôle d'amortissement selon la revendication 8 en rapport avec la revendication 2 et 4, **caractérisée en ce que** la section de l'anneau de cercle formant la zone (7) ayant la plus petite rigidité en pression présente des évidements (17) et des entretoises de matériau (18) s'étendant dans la direction radiale qui sont disposés alternativement dans la direction périphérique.

12. Tôle d'amortissement selon la revendication 8 en rapport avec la revendications 2 et 4, **caractérisée en ce que** la section de l'anneau de cercle formant la zone (7) ayant la plus petite rigidité en pression présente une pluralité de petits évidements (19) qui sont disposés en une rangée située radialement à l'intérieur, disposée radialement au milieu et située radialement à l'extérieur, s'étendant respectivement dans la direction périphérique.

13. Tôle d'amortissement selon l'une des revendications 1 à 4, **caractérisée en ce que** la face d'introduction de pression (2) est réalisée sur toute la surface et que les zones ayant des rigidités en pression différentes l'une de l'autre présentent des modules d'élasticité/pression différents.

14. Tôle d'amortissement selon la revendication 2 ou 4 en rapport avec la revendication 2, **caractérisée en ce qu'**elle est formée à partir d'au moins deux tôles d'amortissement (1a, 1b) situées l'une au-dessus de l'autre, reliées l'une à l'autre et que la zone (7) ayant la rigidité en pression plus petite est réalisée par un évidement sur toute la surface (20) dans la tôle d'amortissement supérieure (1a), orientée vers la force de pression, où l'aptitude élastique à la déformation de cette tôle d'amortissement (1a) est conçue de façon que le composant de pression appliquant la force de pression, s'appliquant d'abord seulement à la tôle d'amortissement supérieure (1a) peut être appliqué, par un positionnement incliné à la pression prédéterminée à la tôle d'amortissement (1b) située en dessous.

15. Tôle d'amortissement selon l'une des revendications 1 à 14, **caractérisée en ce que** des éléments (8 ; 11 ; 13 ; 14 ; 15 ; 16 ; 17, 18 ; 19 ; 20, 23, 24) sont disposés seulement dans des zones choisies de la face d'introduction de pression qui augmentent ou diminuent la rigidité moyenne en pression de ces zones.

16. Tôle d'amortissement selon la revendication 15, **caractérisée en ce que** les mêmes éléments (8 ; 11 ; 13 ; 14 ; 15 ; 16 ; 17, 18 ; 19 ; 20, 23, 24) forment une seule zone et que les zones sont disposées selon une succession croissante d'une manière monotone de leur rigidité moyenne en pression.
